# EUROPEAN PATENT SPECIFICATION

(11) **EP 3 614 355 B1**
(45) Date of publication and mention of the grant of the patent: **23.04.2025**
(21) Application number: 18190520.9
(22) Date of filing: 23.08.2018
(51) Int. Cl.: G05D 1/00, G08G 1/00

(54) **APPARATUSES, METHODS AND COMPUTER PROGRAMS FOR VEHICLES OF A PLATOON OF VEHICLES**
VORRICHTUNG, VERFAHREN UND COMPUTERPROGRAMM FÜR FAHRZEUGE EINER GRUPPE VON FAHRZEUGEN
APPAREIL, PROCÉDÉ ET PROGRAMME INFORMATIQUE POUR DES VÉHICULES D'UN GROUPE DE VÉHICULES

(43) Date of publication of application: 26.02.2020
(73) Proprietor: Volkswagen Aktiengesellschaft, 38440 Wolfsburg (DE)
(72) Inventor: Alieiev, Roman, 39576 Stendal (DE); Kousaridas, Apostolos, 80992 München (DE); Schellmann, Malte, 80992 München (DE); Zhou, Chan, 80992 München (DE)

(56) References cited:
- WO-A1-2018/035145
- US-A1- 2013 080 041
- US-A1- 2018 120 861
- US-B1- 6 397 149

## Description

The present invention relates to apparatuses, methods and computer programs for a vehicle and a leading vehicle of a platoon of vehicles, more specifically, but not exclusively, to improving a reliability of a communication within the platoon of vehicles by transmitting additional acknowledgements among the platoon of vehicles.

The coordinated driving of a group of vehicles (platooning) is a field of research and development. To coordinate the vehicles, in many systems, direct vehicle-to-vehicle messages are used. Using such direct messages, a velocity and/or a direction of driving and some other parameters of the vehicles of the group of vehicles can be coordinated. Such direct messages are often based on a Vehicle-to-Vehicle (V2V), or more general, Vehicle-to-X (V2X) communication protocol. One of the wireless transmission standards backing V2X communication is based on IEEE (Institute of Electrical and Electronics Engineers) standard 802.11p.

In some cases, a reliability of the direct communication is impeded, e.g. if no direct line of sight is available or if there is signal collision among wireless messages sent between vehicles. If this happens, driving maneuvers might be stopped and/or the platoon might be dissolved, which may lead to an interruption of the coordinated driving effort and may require additional time and resources to resolve.

Amoozadeh et al.:" Platoon management with cooperative adaptive cruise control enabled by VANET" shows an exemplary set of wireless messages that can be used to coordinate a platoon of vehicles. Jia et al.: "A Survey on Platoon-Based Vehicular Cyber-Physical Systems, Jia et al.: "A disturbance-adaptive design for VANET-enabled vehicle platoon", Bengtsson et al: "Interaction Protocol for Highway Platoon Merge", Sancar: "Adaptive Cooperative Highway Platooning and Merging", Lu and Hedrick: "Longitudinal Control Algorithm for Automated Vehicle Merging", Segata et al.: "Supporting Platooning Maneuvers through IVC: An Initial Protocol Analysis for the Join Maneuver", US 2010/0256852 A1 and US 2014/0100734 A1 show further implementations of coordinated driving approaches. These papers and publications focus on different aspects of coordinated driving (platooning), but fail to provide mitigation of communication failures if the reliability of the inter-platoon communication is reduced.

US 6,397,149 B1 provides a processional travel control apparatus that allows processional travel with a leading vehicle driven by a driver and at least one succeeding vehicle automatically following the leading vehicle. In US 6,397,149 B1, a message that is transmitted to the leading vehicle can also be transmitted to a preceding or succeeding vehicle.

WO 2018/035145 A1 provides systems and methods for vehicle platoon reconfiguration. WO 2018/035145 A1 discloses various platooning operations, such as merge and split operations.

There may be a desire for an improved concept for coordinating a group of vehicles, which enables a coordination of a platoon of vehicles with an improved reliability.

Embodiments are based on the finding that a reliability of wireless messages between vehicles of a platoon of vehicles may be reduced in certain situations, e.g. if no direct line of sight is available between the vehicles or if the wireless messages collide with other wireless signals. In this case, a driving maneuver that is currently being performed by the platoon of vehicles may be aborted, as the coordination between the vehicles is impeded and the vehicles may fall back to a safe driving mode, which may lead to a dissolution of the platoon. To overcome such situations, additional acknowledgement messages may be introduced. If a platoon control instruction relates to a first vehicle and to a second vehicle, acknowledgement messages transmitted by the vehicles in response to the platoon control instruction may be transmitted to both the first vehicle and the second vehicle, and not only to the leading vehicle of the platoon (which usually is the first vehicle). For example, if the platoon is to be split, the acknowledgement messages may be transmitted to both the "old" leading vehicle of the entire platoon and the "new" leading vehicle of the sub-platoon being split from the entire platoon. If two platoons are merged, the acknowledgement messages of all of the vehicles may be transmitted to both former leading vehicles of the two platoons.

Embodiments provide a method for a vehicle of a platoon of vehicles according to claim 1 of the appended claims.

For example, the platoon control instruction may be related to a platoon merge maneuver. The platoon of vehicles may comprise a first platoon of vehicles and a second platoon of vehicles. The first vehicle may be the leading vehicle of the first platoon of vehicles and the second vehicle may be the leading vehicle of the second platoon of vehicles. The platoon control instruction may be suitable for merging the first platoon of vehicles and the second platoon of vehicles to form a combined platoon of vehicles. In a platoon merge instruction, the acknowledgement messages may be transmitted to both former leading vehicles, e.g. to enable the second vehicle to verify that the merge maneuver is proceeding according to plan or protocol.

The first vehicle may be the leading vehicle of the combined platoon of vehicles. The platoon control instruction may be received from the first vehicle. The method further may further comprise receiving an indication related to a completion of the platoon merge maneuver from the first vehicle after the transmission of the acknowledgement message. This may indicate to the former vehicles of the second platoon of vehicles that the first vehicle is in the process of taking control of the combined platoon of vehicles or that the merge is successfully completed by the first vehicle.

In some embodiments, the platoon control instruction may be related to a platoon split maneuver. The platoon of vehicles may for example comprise a first platoon of vehicles. The first vehicle may be the leading vehicle of the first platoon of vehicles, and the second vehicle may be a vehicle of the platoon of vehicles destined to lead a second platoon of vehicles to be split from the platoon of vehicles. The platoon control instruction may inform vehicles of the second platoon of vehicles about the change in leadership. In a platoon split maneuver, transmitting the acknowledgement messages to both leading vehicles may improve a reliability of the split maneuver.

The method may further comprise receiving an indication related to a completion of the platoon split maneuver from the second vehicle after the transmission of the acknowledgement message. This may indicate to (all) vehicles of the platoon of vehicles that the split operation is successfully completed.

In some embodiments, the platoon control instruction relates to a desire of a further vehicle of the platoon to leave the platoon of vehicles. The first vehicle may be a leading vehicle of the platoon of vehicles and the second vehicle may be the further vehicle. In a leave maneuver, it may improve a reliability of the execution of the leave maneuver if the vehicle about to leave the platoon of vehicles also receives the acknowledgement, that the other vehicles of the platoon of vehicles are ready for and/or agree with the leave maneuver.

For example, the platoon control instruction may be received from the first vehicle and from the second vehicle. This may further improve a reliability of the communication and may further indicate to the group of vehicles, which of the vehicles of the group of vehicles are involved in the platoon control instruction.

The acknowledgement message may be a multicast message of a vehicular communication protocol. The multicast message may be addressed at least to the first vehicle and to the second vehicle. This may reduce an amount of messages to be transmitted, as the same message may be used to transmit the acknowledgement to the first vehicle and the second vehicle.

Embodiments further provide a method for a leading vehicle of a platoon of vehicles according to claim 8 of the appended claims.

In at least some embodiments, the one or more acknowledgement messages are multicast messages of a vehicular communication protocol. The multicast messages may be addressed to the first vehicle and to the second vehicle. This may reduce an amount of messages to be transmitted, as the same message may be used to transmit the acknowledgement to the first vehicle and the second vehicle.

The method may further comprise determining a timeout based on the transmitted platoon control instruction and based on the received one or more acknowledgement messages. The method may comprise repeating a transmission of the platoon control instruction or aborting a platooning maneuver associated with the platoon control instruction if a timeout is determined. This may further increase the reliability of the driving maneuver associated with the platoon control instruction, as the risk of message loss may be mitigated over a plurality of attempts of transmitting the platoon control instruction.

In some embodiments, the platoon control instruction relates to a change in leadership of at least a part of the platoon of vehicles. The leading vehicle may be the first vehicle. The leading vehicle and a second vehicle may be involved in the change in leadership of at least a part of the platoon of vehicles. Platoon control instructions transmitted to coordinate a change in leadership in at least a part of the platoon of vehicles may benefit from the additional acknowledgment messages sent, as communication failures may lead to an abortion of the change in leadership and/or a dissolution of the platoon of vehicles.

Alternatively, the platoon control instruction may relate to a desire of a further vehicle of the platoon to leave the platoon of vehicles. The leading vehicle may be the first vehicle and the further vehicle may be the second vehicle. In a leave maneuver, it may improve a reliability of the execution of the leave maneuver if the vehicle about to leave the platoon of vehicles also receives the acknowledgement that the other vehicles of the platoon of vehicles are ready for and/or agree with the leave maneuver.

Embodiments further provide a computer program having a program code for performing at least one of the methods, when the computer program is executed on a computer, a processor, or a programmable hardware component.

Embodiments further provide an apparatus for a vehicle of a platoon of vehicles, according to claim 13 of the appended claims.

Embodiments further provide an apparatus for a leading vehicle of a platoon of vehicles according to claim 14 of the appended claims.

Some other features or aspects will be described using the following non-limiting embodiments of apparatuses or methods or computer programs or computer program products by way of example only, and with reference to the accompanying figures, in which:
Fig. 1a and 1b show flow charts of embodiments of a method for a vehicle of a platoon of vehicles;
Fig. 1c shows a block diagram of an embodiment of an apparatus for a vehicle of a platoon of vehicles;
Fig. 2a shows a flow chart of an embodiment of a method for a leading vehicle of a platoon of vehicles;
Fig. 2b shows a block diagram of an embodiment of an apparatus for a leading vehicle of a platoon of vehicles;
Figs. 3a to 3c show schematic diagrams and a table of exemplary message transmissions of a platoon merge maneuver in a platooning scenario;
Figs. 4a to 4c show schematic diagrams and a table of exemplary message transmissions of a platoon split maneuver in a platooning scenario; and
Figs. 5a to 5e show schematic diagrams and a table of exemplary message transmissions of a platoon leave maneuver in a platooning scenario.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

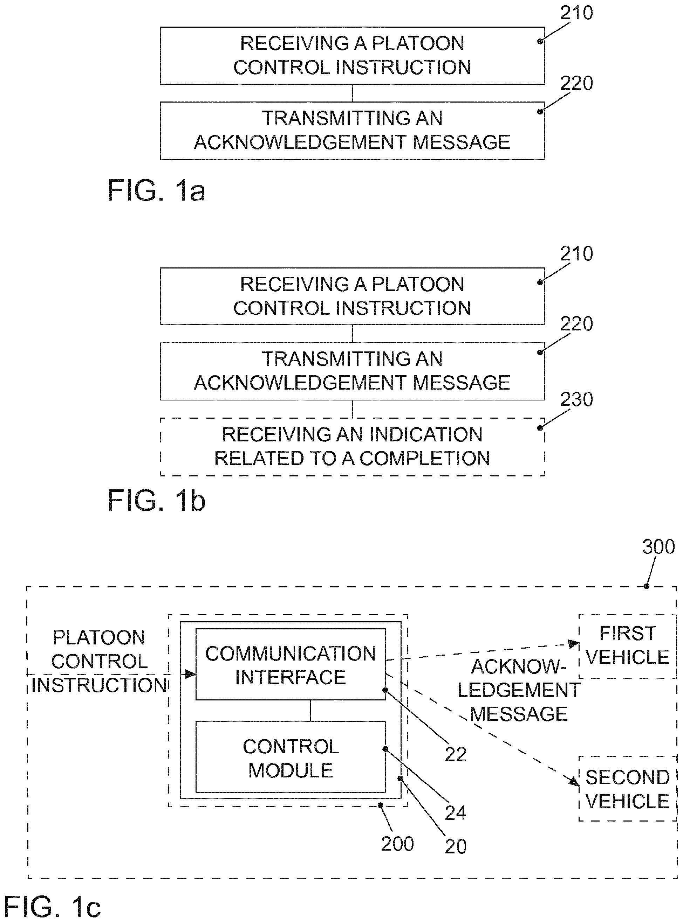

Fig. 1a and 1b show flow charts of embodiments of a method for a vehicle 200 of a platoon of vehicles 300. The method comprises receiving 210 a platoon control instruction. The platoon control instruction is related to the platoon of vehicles 100. The platoon control instruction relates to a first vehicle and a second vehicle. The method further comprises transmitting 220 an acknowledgement message in response to the platoon control instruction to the first vehicle and to the second vehicle.

Fig. 1c shows a block diagram of an embodiment of an (corresponding) apparatus 20 for a vehicle 200 of a platoon of vehicles 300. The apparatus 20 comprises a communication interface 22 for communicating wirelessly with vehicles of the platoon of vehicles 300. The apparatus 20 further comprises a control module 24 configured to receive a platoon control instruction via the communication interface 22. The platoon control instruction is related to the platoon of vehicles 300. The platoon control instruction relates to a first vehicle and a second vehicle. The control module is configured to transmit an acknowledgement message in response to the platoon control instruction to the first vehicle and to the second vehicle via the communication interface 22. The control module 24 is coupled to the communication interface 22. In at least some embodiments the control module 24 is further configured to execute further method steps of the method of Figs. 1a and 1b, e.g. in conjunction with the communication interface 22. Fig. 1c further shows the vehicle 200 comprising the apparatus 20. Fig. 1c further shows the platoon of vehicles 300 comprising the vehicle 200, the first vehicle and the second vehicle.

The following description relates to both the method of Figs. 1a and 1b and to the apparatus 20 of Fig. 1c.

At least some embodiments relate to improving a reliability of an execution of a platoon control instruction. Grouping vehicles into platoons is method of increasing the capacity of roads. Within a platoon, a group of vehicles may be coordinated to accelerate or break simultaneously, allowing for smaller distances between the vehicles. Among the vehicles of the platoon, vehicle-to-vehicle communication may be used to coordinate the group of vehicles. The vehicle and/or vehicles of the group of vehicles may be vehicles for transporting goods, e.g. a truck or a lorry. Alternatively, the vehicle and/or the platoon of vehicles may be (personal) automobiles. In some embodiments, the vehicle and/or vehicles of the platoon of vehicles may be autonomous vehicles or semi-autonomously driven vehicles. The vehicle and/or vehicles of the platoon of vehicles may be suitable or configured for driving in a platoon of vehicles. In some embodiments, the vehicle and/or the platoon of vehicles may be airplanes, helicopters or ships suitable or configured for moving in a platoon of airplanes, helicopters or ships. In some embodiments, the vehicle and/or vehicles of the platoon of vehicles may be configured to be steered in a coordinated driving configuration.

A platoon may comprise a leading vehicle, i.e. a vehicle that determines and controls a velocity and heading of the group of vehicles and that transmits and initiates an execution of driving instructions to be executed by vehicles of the platoon of vehicles. In some embodiments, leadership in a platoon might not be bounded to an individual vehicle. For example, the platoon might be coordinated by a central entity (e.g. a "cloud" entity). For example, the leading vehicle may be a vehicle of the platoon of vehicles having (temporary) leading function, leading role or leading vehicle function. In some embodiments, a leading vehicle might be a vehicle of the platoon of vehicles that drives in front of the other vehicles of the platoon of vehicles or that relays the messages of the central entity. The leading vehicle may lead the platoon of vehicles. For example, the leading vehicle may drive in front of the other vehicles of the platoon of vehicles. For example, if the platoon of vehicles is to change lanes on the road or is to perform other driving maneuvers, these maneuvers are initiated by the leading vehicle and transmitted as a plurality of driving instructions to the vehicles of the platoon of vehicles. For example, the plurality of driving instructions (e.g. the information related to the plurality of driving instructions) may be transmitted from the leading vehicle to the other vehicles, e.g. directly from the leading vehicle to the other vehicles of the platoon of vehicles or relayed via the other vehicles of the platoon of vehicles (i.e. as multi-hop-messages).

The method comprises receiving 210 a platoon control instruction, wherein the platoon control instruction is related to the platoon of vehicles 100. The platoon control instruction relates to a first vehicle and a second vehicle. At least one of the first vehicle and the second vehicle may be a leading vehicle of the platoon of vehicles. For example, the platoon control instruction may be a platoon control instruction for changing a composition of the platoon of vehicles. For example, the platoon control instruction may be a platoon control instruction that directly changes a composition of the platoon of vehicles. For example, the platoon control instruction may be characterized in that a size (e.g. a number of vehicles) of the platoon of vehicles changes as a (direct) result of the platoon control instruction. In at least some embodiments, the platoon control instruction relates to (e.g. initiates or executes) a change in leadership of at least a part of the platoon of vehicles. The platoon control instruction be suitable for accomplishing a change in leadership of at least a part of the platoon of vehicles. The platoon control instruction may directly accomplish or result in a change in leadership of at least a part of the platoon of vehicles. For example, the platoon control instruction may be related to a platoon merge maneuver. For example, the platoon control instruction may initiate a driving instruction related to a platoon merge maneuver. For example, the platoon control instruction may be related to a platoon split maneuver. For example, the platoon control instruction may initiate a driving instruction related to a platoon split maneuver. In some embodiment, the platoon control instruction may relate to a desire of a further vehicle of the platoon to leave the platoon of vehicles. For example, the platoon control instruction may instruct vehicles of the platoon of vehicles to prepare for the first vehicle or the second vehicle to leave the platoon of vehicles.

The platoon control instruction may indicate that acknowledgement messages transmitted in response to the platoon control instruction are to be transmitted to the first vehicle and to the second vehicle (e.g. if the second vehicle is still present in a platooning maneuver associated with the platoon control instruction). For example, the platoon control instruction may (explicitly) specify a destination (e.g. vehicle identifier) acknowledgement messages are to be transmitted to in response to the platoon control instruction. Alternatively or additionally, the platoon control instruction may be based on a platooning protocol, and the platooning protocol may specify, that, in response to the platoon control instruction, acknowledgement messages are to be transmitted to the first vehicle and to the second vehicle specified in the platoon control instruction.

The platoon control instruction may be received 210 from the first vehicle and from the second vehicle. For example, the receiving 210 of the platoon control instruction may comprise receiving a first control instruction from the first vehicle and a second control instruction from the second vehicle. In some embodiments, the first control instruction and the second control instruction may be identical in content (but from different sources). Alternatively, the first control instruction and the second control instruction may correspond to each other, e.g. the first control instruction and the second control instruction may refer to the same platooning maneuver.

The method further comprises transmitting 220 an acknowledgement message to the first vehicle and to the second vehicle. For example, the acknowledgement message may be an Acknowledgement (ACK) or Negative Acknowledgement (NACK) message of a platooning communication protocol or of a vehicular communication protocol. In some embodiments, the transmitting 220 of the acknowledgement message may comprise transmitting separate (unicast) acknowledgement messages to the first vehicle and the second vehicle. Alternatively, the same acknowledgement message may be transmitted 220 to the first vehicle and the second vehicle. The acknowledgement message may be a multicast message of a vehicular communication protocol. The multicast message may be addressed (at least) to the first vehicle and to the second vehicle. In at least some embodiments, the multicast message may be a message with a specified and/or finite number of recipients/destinations, wherein the number is larger than 1.

The acknowledgement message is transmitted 220 in response to the platoon control instruction. For example, the method may comprise determining (evaluating) the acknowledgement message based on the platoon control instruction. The method may comprise determining the acknowledgement message with an acknowledgement (ACK) if the vehicle approves of the platoon control instruction or if the vehicle 200 is willing to or capable of executing the platoon control instruction. The method may further comprise executing the platoon control instruction. The method may comprise determining the acknowledgement message with an acknowledgement after the vehicle 200 has successfully executed the platoon control instruction. The method may comprise determining the acknowledgement message with a negative acknowledgement (NACK) if the vehicle disapproves of the platoon control instruction or if the vehicle 200 is unwilling to or incapable of executing the platoon control instruction. The method may comprise determining the acknowledgement message with a negative acknowledgement if the vehicle 200 has failed in executing the platoon control instruction.

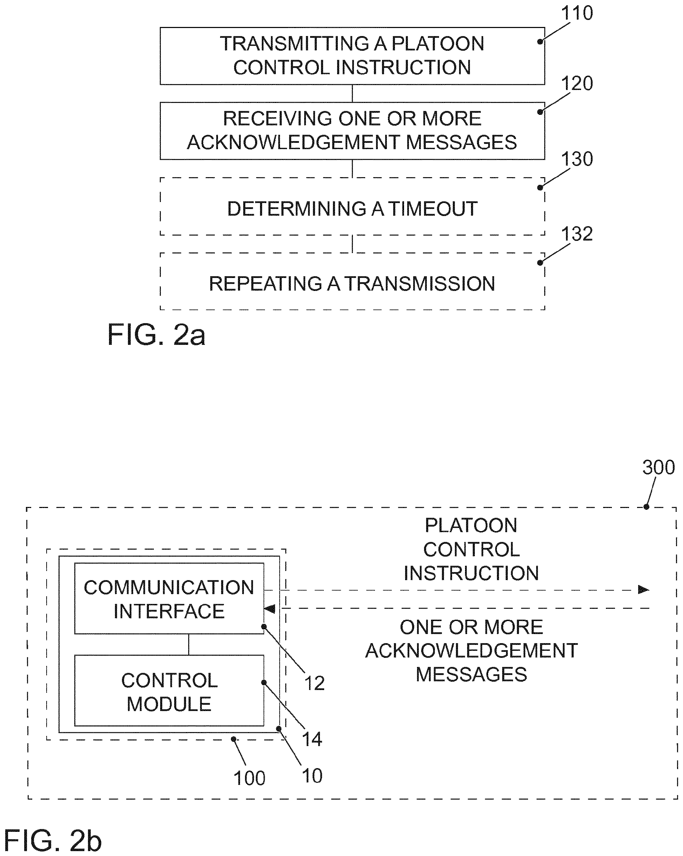

For example, the platoon control instruction may be received 210 and the acknowledgement message may be transmitted 220 to the (other vehicles of the) platoon of vehicles using vehicle-to-vehicle communication, e.g. using a vehicular communication protocol. The vehicle 200 the other vehicles of the platoon of vehicles 300 (e.g. the leading vehicle 100 introduced in connection with Figs. 2a and 2b) may communicate using one of vehicle-to-vehicle communication (V2V) / car-to-car communication (C2C). The vehicle 200, the leading vehicle 100 and/or the other vehicles of the group of vehicles 300 may communicate based on a vehicular communication protocol, e.g. based on a direct vehicular communication protocol. The vehicle 200, the leading vehicle 100 and/or the other vehicles of the group of vehicles 300 may communicate directly, e.g. using direct V2V / C2C communication. For example, the (direct) vehicular communication protocol may be based on Institute of Electrical and Electronics Engineers standard 802.11p. The communication interface 22 (and/or 12 as introduced in connection with Fig. 2b) may be configured to communicate via the (direct) vehicular communication protocol. In at least some embodiments, the vehicle-to-vehicle communication may be at least partially based on multi-hop communication. For example, at least some vehicles of the group of vehicles may relay the platoon control instruction and/or the acknowledgement message to following vehicles of the group of vehicles.

In at least some embodiments the platoon control instruction relates to a change in leadership of at least a part of the platoon of vehicles. The first vehicle may be a first vehicle involved in the change of leadership and the second vehicle may be a second vehicle involved in the change of leadership. For example, the control instruction may accomplish the change in leadership of at least a part of the platoon of vehicles.

For example, the platoon control instruction may be related to a platoon merge maneuver. A platoon merge maneuver may be a maneuver in which two platoons (a first and a second) of vehicles are merged to form the platoon of vehicle. The platoon control instruction may be suitable for merging (e.g. for accomplishing the merge of) the first platoon of vehicles and the second platoon of vehicles to form a combined platoon of vehicles. The platoon of vehicles 300 may comprise both the first platoon of vehicles and the second platoon of vehicles. The first vehicle may be the leading vehicle of the first platoon of vehicles and the second vehicle may be the leading vehicle of the second platoon of vehicles. Usually, in a platoon merge maneuver, the (combined) platoon comprising the first platoon and the second platoon is led by the leading vehicle of the platoon that is driving ahead, e.g. by the (first) leading vehicle of the first platoon if the first platoon is driving ahead of the second platoon. The platoon control instruction may relate to a change in leadership for the vehicles of the (former) second platoon of vehicles. After the merge, the vehicles of the (former) second platoon of vehicles may be led by the leading vehicle of the (former) first platoon of vehicles. The first vehicle (i.e. the leading vehicle of the (former) first platoon) may be the leading vehicle of the combined platoon of vehicles. The platoon control instruction may be received 120 from the first vehicle.

In at least some embodiments, the method further comprises receiving 230 an indication related to a completion of the platoon merge maneuver from the first vehicle after the transmission 220 of the acknowledgement message. For example, the indication related to the completion of the platoon merge maneuver may indicate that the platoon merge maneuver is successfully completed and/or that the change in leadership caused by the merge maneuver is effective.

Alternatively, the platoon control instruction may be related to a platoon split maneuver. A platoon split maneuver may be a maneuver, in which the platoon of vehicles 300 is split into two sub-platoons, e.g. in which the platoon of vehicles is split into a first platoon of vehicles and a second platoon of vehicles. For example, the platoon of vehicles 300 may comprise (or consist of) the first platoon of vehicles and the second platoon of vehicles. The first platoon of vehicles and the second platoon of vehicles may form the platoon of vehicles 300. The first platoon of vehicles may drive in front of the second platoon of vehicles. The first vehicle may be the leading vehicle of the first platoon of vehicles, and the second vehicle is a vehicle of the platoon of vehicles destined to lead a second platoon of vehicles to be split from the platoon of vehicles. The second vehicle may be the leading vehicle of the second platoon of vehicles after the platoon split maneuver is completed. The platoon control instruction may inform vehicles of the second platoon of vehicles about the change in leadership. The platoon control instruction may relate to a change in leadership for the vehicles of the second platoon of vehicles.

In at least some embodiments, the method further comprises receiving 230 an indication related to a completion of the platoon split maneuver from the second vehicle after the transmission 220 of the acknowledgement message. For example, the indication related to the completion of the platoon split maneuver may indicate that the platoon merge split is successfully completed and/or that the change in leadership caused by the split maneuver is effective.

In some embodiments, the platoon control instruction may relate to a desire of a further vehicle of the platoon to leave the platoon of vehicles. In this case, the first vehicle may be the leading vehicle 100 of the platoon of vehicles and the second vehicle may be the further vehicle. For example, the platoon control instruction may be received in response to a leave request of the further vehicle. If the further vehicle desires to leave the platoon of vehicles, a change in leadership may be initiated: The further vehicle may no longer be led by a vehicle of the platoon of vehicles. In order to implement the platoon control instruction, the further vehicle may either be treated as an intruder, or the platoon may be split up into a first platoon (comprising vehicles of the platoon driving 300 driving in front of the further vehicle) and a second platoon (comprising vehicles of the platoon 300 driving behind the further vehicle). The first platoon and the second platoon may be merged after the further vehicle is no longer located between the vehicles of the first platoon and of the second platoon.

The communication interface 22 (and/or a communication interface 12 introduced in connection with Fig. 2b) may correspond to one or more inputs and/or outputs for receiving and/or transmitting information, which may be in digital (bit) values according to a specified code, within a module, between modules or between modules of different entities. For example, the communication interface 12; 22 may be a wireless communication interface. In at least some embodiments, the communication interface 12; 22 may be coupled to a wireless transceiver module for communicating with the other vehicles of the platoon of vehicles 300.

In embodiments the control module 24 (and/or the control module 14 introduced in connection with Fig. 2b) may be implemented using one or more processing units, one or more processing devices, any means for processing, such as a processor, a computer or a programmable hardware component being operable with accordingly adapted software. In other words, the described function of the control module 14; 24 may as well be implemented in software, which is then executed on one or more programmable hardware components. Such hardware components may comprise a general purpose processor, a Digital Signal Processor (DSP), a micro-controller, etc.

More details and aspects of the method and/or the apparatus 20 are mentioned in connection with the proposed concept or one or more examples described above or below (e.g. Fig. 2a to 5e). The method and/or the apparatus 20 may comprise one or more additional optional features corresponding to one or more aspects of the proposed concept or one or more examples described above or below.

Fig. 2a shows a flow chart of an embodiment of a method for a leading vehicle 100 of a platoon of vehicles 300. The method comprises transmitting 110 a platoon control instruction. The platoon control instruction is related to the platoon of vehicles 300. The platoon control instruction relates to a first vehicle and a second vehicle. The platoon control instruction indicates, that acknowledgement messages transmitted in response to the platoon control instruction are to be transmitted to the first vehicle and to the second vehicle. The method further comprises receiving 120 one or more acknowledgement messages in response to the platoon control instruction from vehicles of the platoon of vehicles.

Fig. 2b shows a block diagram of an embodiment of an (corresponding) apparatus 10 for a leading vehicle 100 of a platoon of vehicles 300. The apparatus 10 comprises a communication interface 12 for communicating wirelessly with vehicles of the platoon of vehicles 300. The apparatus 10 further comprises a control module 14, coupled to the communication interface 12. The control module 14 is configured to transmit a platoon control instruction via the communication interface 12. The platoon control instruction is related to the platoon of vehicles 300. The platoon control instruction relates to a first vehicle and a second vehicle. The platoon control instruction indicates, that acknowledgement messages transmitted in response to the platoon control instruction are to be transmitted to the first vehicle and to the second vehicle (e.g. at least if the second vehicle is still present in a platooning maneuver associated with the platoon control instruction). The control module 14 is configured to receive one or more acknowledgement messages in response to the platoon control instruction from vehicles of the platoon of vehicles via the communication interface 12. In at least some embodiments the control module 14 is further configured to execute further method steps of the method of Fig. 2a, e.g. in conjunction with the communication interface 12. Fig. 2b further shows the leading vehicle 100 comprising the apparatus 10. Fig. 1c further shows the platoon of vehicles 300 comprising the leading vehicle 100. For example, the leading vehicle 100 may be the first vehicle or the second vehicle.

The following description relates to both the method of Fig. 2a and to the apparatus 10 of Fig. 2b.

The method comprises transmitting 110 the platoon control instruction. For example, the platoon control instruction may be transmitted via a vehicular communication protocol, e.g. using direct vehicle-to-vehicle communication and/or using multi-hop vehicle-to-vehicle communication. For example, the platoon control instruction may be transmitted to all vehicles of the platoon of vehicles, e.g. as a broadcast message. Alternatively, the platoon control instruction may be transmitted or addressed (only) to vehicles of the platoon of vehicles affected by the platoon control instruction, e.g. using one or more unicast messages or using a multicast message. For example, the platoon control instruction may be transmitted 110 to follower vehicles (e.g. non-leading vehicles) of the platoon of vehicles (e.g. of the first platoon of vehicles or of the second platoon of vehicles), e.g. follower vehicles of the platoon of vehicles affected by the platoon control instruction.

The method comprises receiving 120 one or more acknowledgement messages in response to the platoon control instruction from vehicles of the platoon of vehicles. For example, the one or more acknowledgement messages may originate from one or more vehicles of the platoon of vehicles affected by the platoon control instruction. Alternatively, the leading vehicle 100 may receive an acknowledgement message from each (other) vehicle of the platoon of vehicles. The one or more acknowledgement messages may be received via a vehicular communication protocol, e.g. using direct vehicle-to-vehicle communication and/or using multi-hop vehicle-to-vehicle communication. In at least some embodiments, the one or more acknowledgement messages are received as one or more multicast messages addressed (at least) to the first vehicle and the second vehicle. The leading vehicle 100 may be the first vehicle or the second vehicle. For example, the one or more acknowledgement messages may be are multicast messages of a vehicular communication protocol. The multicast messages may be addressed to the leading vehicle 100 and to the second vehicle

In various embodiments, the platoon control instruction relates to a change in leadership of at least a part of the platoon of vehicles. The leading vehicle and the second vehicle may be involved in the change in leadership of at least a part of the platoon of vehicles. The leading vehicle 100 may be the first vehicle. For example, the platoon control instruction may relate to a platoon merge maneuver or to a platoon split maneuver.

In some embodiments, the platoon control instruction may relate to a desire of a further vehicle of the platoon to leave the platoon of vehicles. The leading vehicle 100 may be the first vehicle and the further vehicle may be the second vehicle.

In some embodiments, the method further comprises determining 130 a timeout based on the transmitted platoon control instruction and based on the received 120 one or more acknowledgement messages. For example, the determining 130 of the timeout may comprise comparing the received one or more acknowledgement messages to information related to acknowledgement messages expected in response to the transmitted platoon control instruction. For example, the leading vehicle 100 may expect an acknowledgement message from each vehicle of the platoon of vehicles or from each vehicle of the platoon of vehicles affected by the platoon control instruction. The method may comprise determining 130 a timeout, if fewer acknowledgement messages than expected are received 120 in response to the transmitted platoon control instruction or if at least one of the one or more received 120 acknowledgement messages comprises a negative acknowledgement (NACK). In at least some embodiments, the timeout may be determined for each expected acknowledgement message individually. The method may comprise repeating 132 the transmission 110 of the platoon control instruction or aborting a platooning maneuver associated with the platoon control instruction if a timeout is determined.

In at least some embodiments, the method further comprises transmitting an indication related to a completion of the platoon split maneuver after receiving the one or more acknowledgement messages, e.g. if the leading vehicle 100 is the second vehicle in a platoon split maneuver.

In at least some embodiments, the method further comprises transmitting an indication related to a completion of the platoon merge maneuver after receiving the one or more acknowledgement messages, e.g. if the leading vehicle 100 is the first vehicle in a platoon merge maneuver.

More details and aspects of the method and/or the apparatus 10 are mentioned in connection with the proposed concept or one or more examples described above or below (e.g. Fig. 1a to 1c, 3a to 5e). The method and/or the apparatus 20 may comprise one or more additional optional features corresponding to one or more aspects of the proposed concept or one or more examples described above or below.

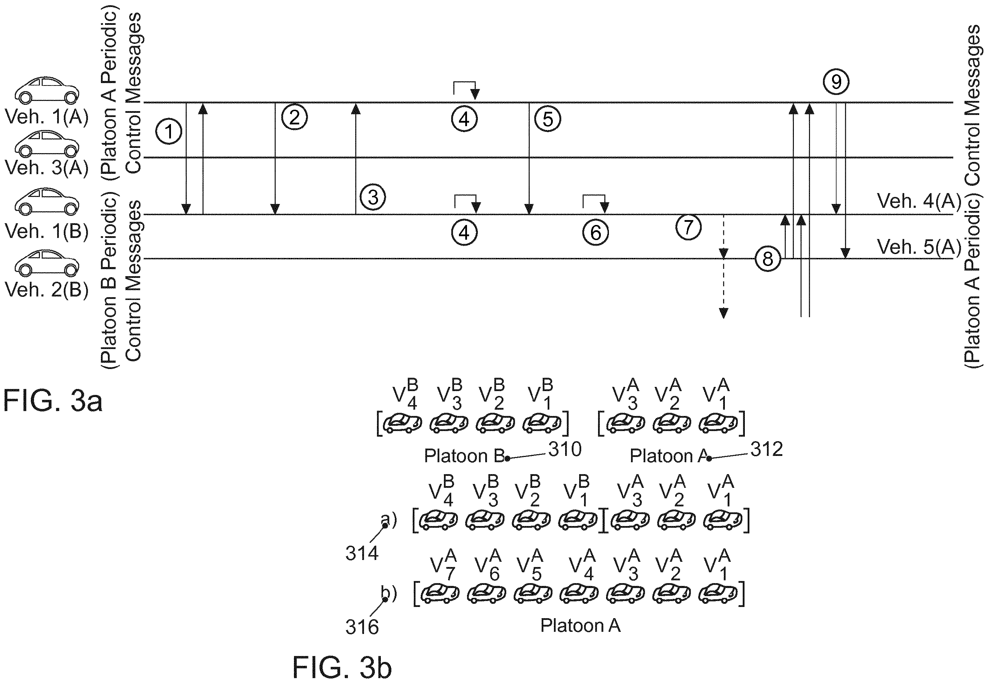

Figs. 3a to 3c show schematic diagrams and a table of exemplary message transmissions of a platoon merge maneuver in a platooning scenario.

Fig. 3a shows a flow chart of signaling in a platooning merge maneuver. Fig. 3a shows Vehicles (Veh.) 1(A) and 3(A) of a first platoon A and vehicles 1(B) and 2(B) of a second platoon B of the platoon of vehicles. Between vehicles 1(A) and 3(A) of the first platoon A periodic control messages are exchanged, and between vehicles 1(B) and 2(B) of the second platoon B periodic platoon control messages are exchanged. Possibly, negotiations and other activities have happened before the process outlined in Fig. 3a starts.

In step 1, a merge request (1a), together with an authentication, is transmitted from Veh. 1(A) to Veh. 1(B), e.g. as a broadcast message. Veh. 1(A) may be the first (leading) vehicle and Veh. 1(B) may be the second (leading) vehicle as introduced in connection with Figs. 1a to 2b. Veh. 1(B) responds (1b) to the merge request and authentication (e.g. using a unicast message). In step 2, Veh. 1(A) sends settings and suggests an order for merging to Veh. 1(B) (e.g. using a unicast message). The leaders (e.g. the first and second vehicle) may ask the participants if the proposed settings do not violate the constraints of each vehicle in the platoon B. In step 3, Veh. 1(B) sends settings desired by platoon B which do not violate the proposed settings of platoon A in step 2 and confirms the proposed by Veh 1(A) settings or, if the proposed order and or setting are not suitable for platoon B, proposes the new, changed order to Veh. 1(A) (e.g. using a unicast message).

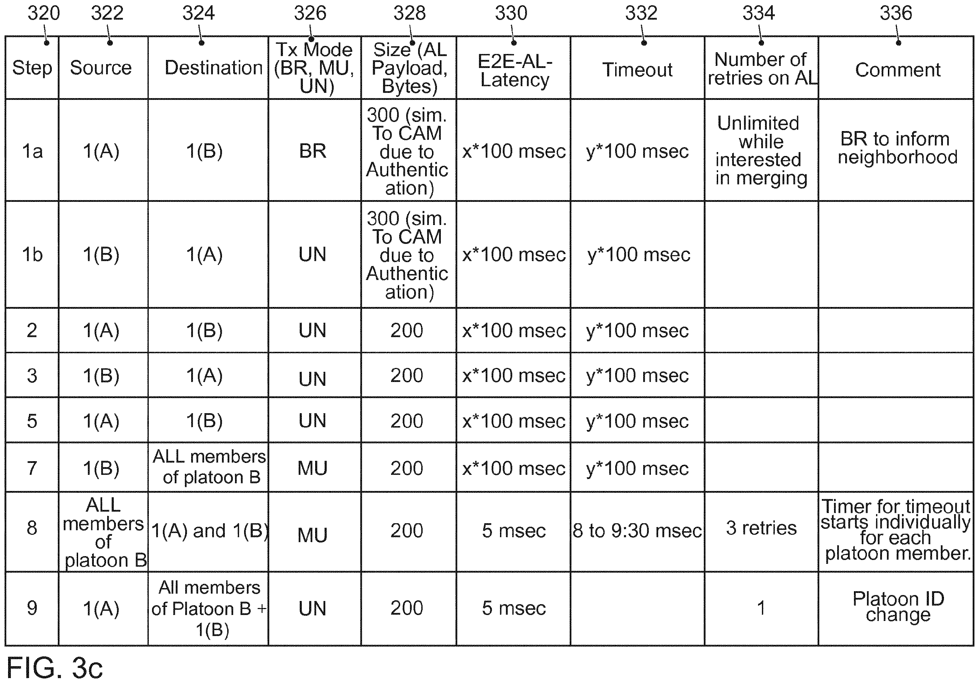

In step 4, both Veh. 1(A) and Veh. 1(B) initiate the merge platoon maneuver (e.g. the platoon merge maneuver). Further steps may assume Veh. 1(A) to become leader of the merge platoon (e.g. the platoon of vehicles 300). In step 5, Veh. 1(A) sends a merge response and settings for the merged Platoon to Veh. 1(B) (e.g. using a unicast message). In step 6, Veh. 1(B) processes the response and reduces the time-gap in case of a merge accept. In step 7, Veh. 1(B) sends a change platoon leader message to its members and relays the settings to its members (e.g. the vehicles of the second platoon, e.g. Veh. 2(B), e.g. as a multicast message). The change platoon leader message may be the platoon control instruction introduced in connection with Figs. 1a to 2b. In step 8, ACK (e.g. the acknowledgement message) messages are sent from the members of the second platoon to Veh. 1(B) (e.g. the second vehicle) and Veh. 1(A) (e.g. the first vehicle). No NACK may be possible, if timeout if reached, step 7 may be repeated, or the process may be aborted. The ACK messages may be sent as multicast messages. In step 9, Veh. 1(A) acknowledges that all ACKs are heard by Veh. 1(A) and the merge is done by transmitting a message to the vehicles of the (former) second platoon (e.g. Veh. 1(B), Veh. 2(B), e.g. as a multicast message). Between 7 and 9, the vehicles may listen to both leaders and both leaders may align their commands. Exemplary specifics of the messages of steps 1 to 9 may be found in the table of Fig. 3c. After the merge is complete, Vehs. 1(B) and 2(B) are now denoted Vehs. 4(A) and 5(A). Vehs. 1(A), 3(A), 4(A) and 5(A) may now belong to the (first) platoon A. Between the vehicles of platoon A, periodic control messages are exchanged.

Fig. 3b shows a schematic diagram of a platoon merge instruction. Platoon B 310, comprising vehicles and Platoon A 312, comprising vehicles are to be merged. In a first step 314, a gap between the platoons A 312 and B 310 are reduced. In a second step 316, the platoons are merged to form a combined platoon A comprising vehicles .

Fig. 3c shows an exemplary (illustrative) table of platooning service steps (operations) and messages of the merge operation. x may be defined to be between 1 and 3, y may be defined to be between 6 and 7, each step may have independent x and y. Column 320 shows the number of the step, column 322 the source of the message, column 324 the destination of the message, column 326 the transmission (tx) mode (e.g. broadcast (BR), multicast (MU), unicast (UN)), column 328 the size (Application Layer (AL, of the Open Systems Interconnection model) payload in bytes), column 330 the end-to-end-AL latency, column 332 the timeout, column 334 the number of retries on AL and column 336 may show comments.

The size of the messages may be 300 bytes for the messages sent in steps 1a and 1b, which may be similar to a cooperative awareness message (CAM) due to authentication. The size of the other messages may be 200 bytes. The end-to-end latency for the messages of steps 1-7 may be x*100 ms (e.g. 100-300 ms), while the end-to-end latency of the messages of steps 8 and 9 may be 5 ms (e.g. to make sure all affected vehicles have received the platoon control instruction. The timeout for the messages of steps 1-7 may be y*100 ms (e.g. 600-700 ms), while the timeout of the messages of steps 8 and 9 may be 30 msec. The message of step 1a may be repeated indefinitely while Veh. 1(A) is interested in merging, the message of step 9 may be retried up to 3 times and the message of step 9 may be retried once. The message of step 1 may be a broadcast message to inform the neighborhood of the desire to merge of Veh. 1a. The timer for the timeout of message 8 may start individually for each platoon member. In step 9, the platoon identifier (ID) may change. If this fails for at least one vehicle, the platoon leader may detect the old platoon ID. Steps 8 and 9 may define the transition from Platoon B to Platoon A. This may be accomplished quickly, as trucks may be in a state of uncertainty during this phase. Note: the constraint 30 ms may result from 100 ms total time (3m at 30m/s), and 5 ms may result from the 30 ms constraint.

More details and aspects of the method, process or maneuver are mentioned in connection with the proposed concept or one or more examples described above (e.g. Fig. 1a to 2b, 4a to 5e). The method, process or maneuver may comprise one or more additional optional features corresponding to one or more aspects of the proposed concept or one or more examples described above or below.

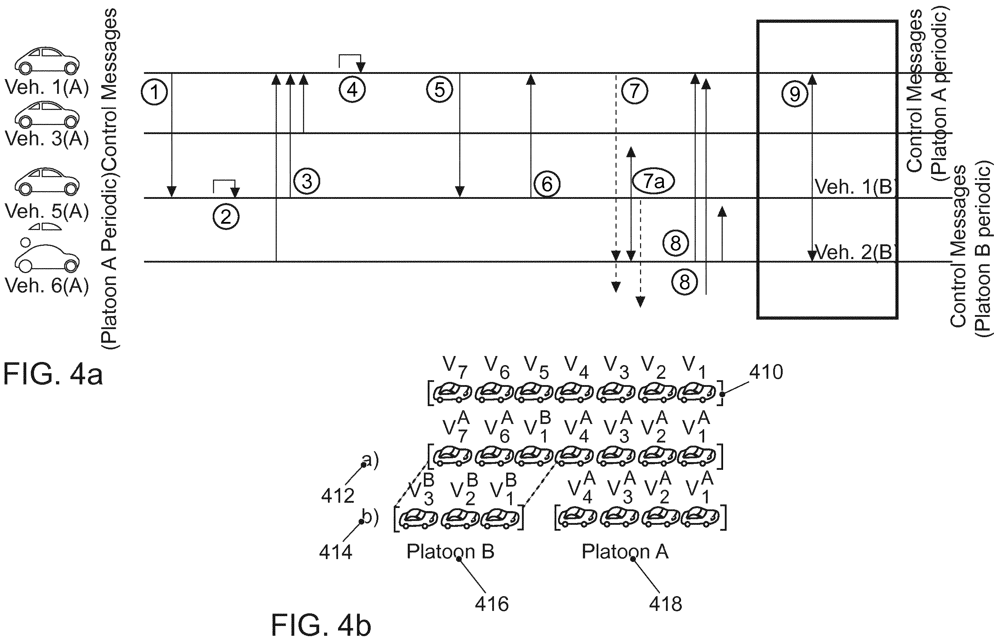

Figs. 4a to 4c show schematic diagrams and a table of exemplary message transmissions of a platoon split maneuver in a platooning scenario.

Fig. 4a shows a flow chart of signaling in a basic platooning split maneuver. Fig. 4a shows Vehicles (Veh.)1(A), 3(A), 5(A) and 6(A) of platoon A (e.g. the platoon of vehicles 300). Between vehicles 1(A) - 6(A) of platoon A, periodic control messages are exchanged. Possibly, negotiations and other activities have happened before this process starts.

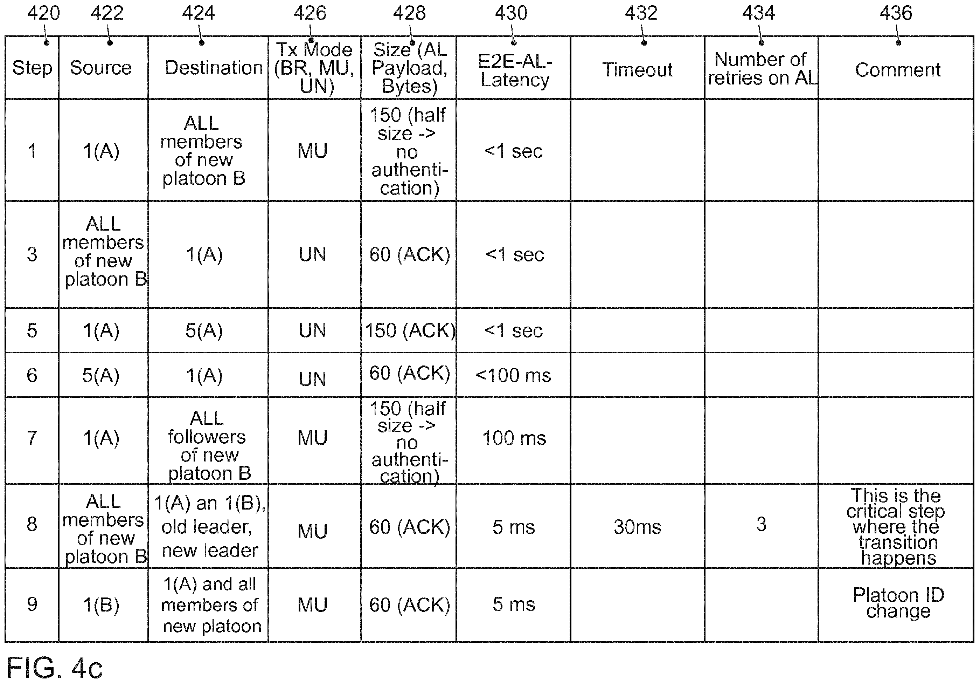

In step 1, Veh. 1(A) transmits a split request, including settings for both new platoons, at least to Veh. 5(a), e.g. using a multicast message. Veh. 1(A) may be the first vehicle and Veh. 5(A) may be the second vehicle. Veh. 1(A) may transmit the split request to all members of new platoon B. In step 2, Veh. 5(A) processes the split request and decides on whether it accepts or rejects the request. In step 3, at least Veh. 5(A) may transmit a split accept/reject message to Veh. 1(A), e.g. using a unicast message. For example, all of the members of new platoon B may transmit a split accept/reject message to Veh. 1(A) (as shown in Fig. 4c). In Step 4, Veh. 1(A) processes the response, and possibly cancels the split maneuver. In the following, it may be assumed that the leader has decided on splitting the platoon (e.g. the platoon of vehicles 300).

In step 5, Veh. 1(A) transmits a change platoon leader message to Veh. 5(A), e.g. using a unicast message. In step 6, Veh. 5(A) transmits an acknowledgement message to Veh. 1(A), in response to the change platoon leader message, e.g. as a unicast message. In step 7, Veh. 1(A) may inform (all) followers of new platoon B (e.g. the second platoon) about the new platoon leader (Veh. 5(A)), e.g. using a multicast message). The message of step 7 may be the platoon control instruction introduced in connection with Figs. 1a to 2b. In step 7a, the new platoon leader Veh. 5(A) informs its members (e.g. using a multicast message). In step 8, the followers of new platoon B may send an acknowledgement message (ACK) to the old (Veh. 1(A)) and new (Veh. 5(A)) leader. In step 9, Veh. 5(A) transmits a split done message to Veh. 1(A) and all members of new platoon B, e.g. using a multicast message. Former vehicles 5(A) and 6(A) are now denoted Veh. 1(B) and 2(B). Between vehicles 1(A) and 3(A) of platoon A periodic control messages are exchanged, and between vehicles 1(B) and 2(B) of platoon B periodic platoon control messages are exchanged

Fig. 4b shows a schematic diagram of a platoon merge instruction. Fig. 4b shows a platoon 410 vehicles . In step a 412, former vehicle is changed to vehicle . In step 414, the platoon in changed into platoon B 416 comprising vehicles and platoon A 418 comprising vehicles .

Fig. 4c shows a table of platooning service steps (operations) and messages of the basic split operation of Fig. 4a. Column 420 shows the number of the step, column 422 the source of the message, column 424 the destination of the message, column 426 the transmission (tx) mode (e.g. broadcast (BR), multicast (MU), unicast (UN)), column 428 the size (AL payload in bytes), column 430 the end-to-end-AL latency, column 432 the timeout, column 434 the number of retries on AL, and column 436 may show comments.

The size of messages of steps 1, 5 and 7 (the messages of Veh. 1(A)) may be 150 bytes, while the size of messages of steps 3, 6, 8 and 9 (ACK messages) may be 60 bytes. The size of messages of steps 1 and 7 may be 150 bytes (half size) as no authentication might be used. The end-to-end latency of the messages of steps 1,3 and 5 may be < 1 sec, of step 6 < 100 ms, of step 7 100 ms and of steps 8 and 9 5 ms. The timeout of step 8 may be 30 ms, and the number of retries of step 8 may be 3. Step 8 may be the critical step where the transition happens. In step 9, the platoon identifier (ID) may change. If this fails for at least one vehicle, the platoon leader may detect the old platoon id.

More details and aspects of the method, process or maneuver are mentioned in connection with the proposed concept or one or more examples described above (e.g. Fig. 1a to 3c, 5a to 5e). The method, process or maneuver may comprise one or more additional optional features corresponding to one or more aspects of the proposed concept or one or more examples described above or below.

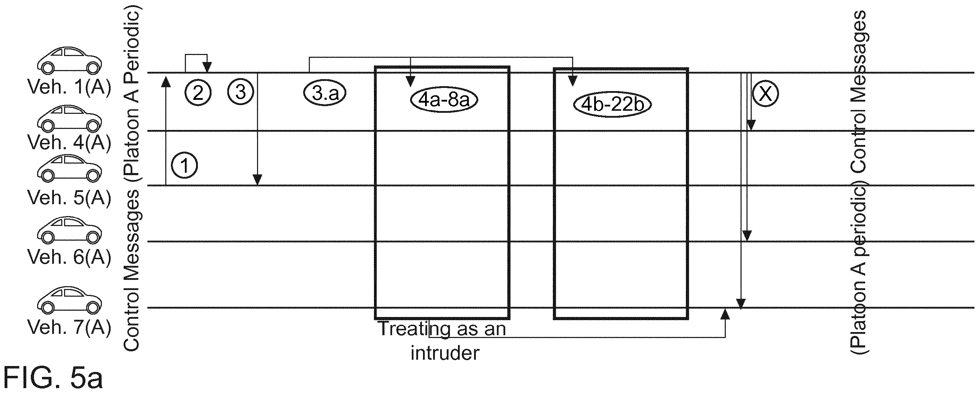

Figs. 5a to 5e show schematic diagrams and a table of exemplary message transmissions of a platoon leave maneuver in a platooning scenario.

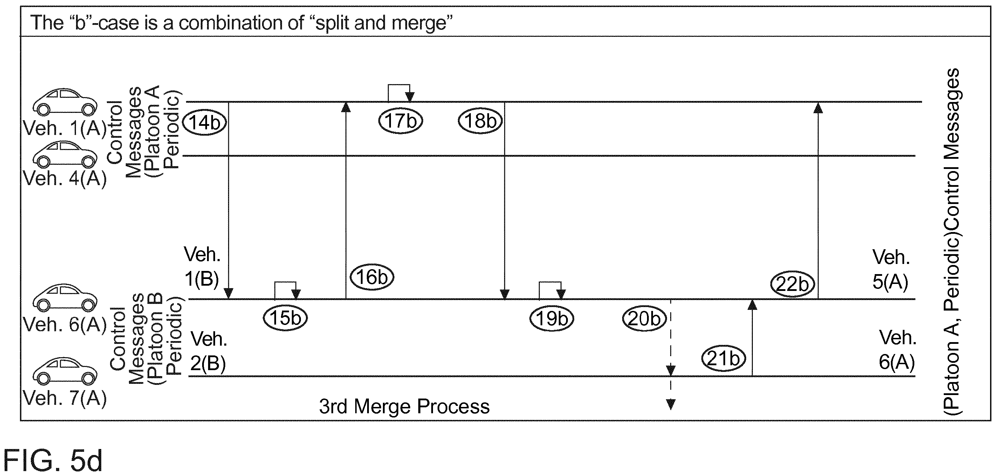

Fig. 5a to 5d show flow charts of signaling in two examples of platooning leave maneuvers. In a first example, the vehicle desiring to leave the platoon may be treated like an intruder (step 4a). In a second example, a split maneuver may be used in a vehicle desires to leave the platoon. Figs. 5a-5d shows Vehicles (Veh.)1(A), 4(A), 5(A), 6(A) and 7(A) of platoon A (e.g. the platoon of vehicles 300). Between vehicles 1(A) - 7(A) of platoon A, periodic control messages are exchanged. Veh. 5(A) is the vehicle desiring to leave the platoon. In Fig. 5d, Veh. 5(A) is not shown.

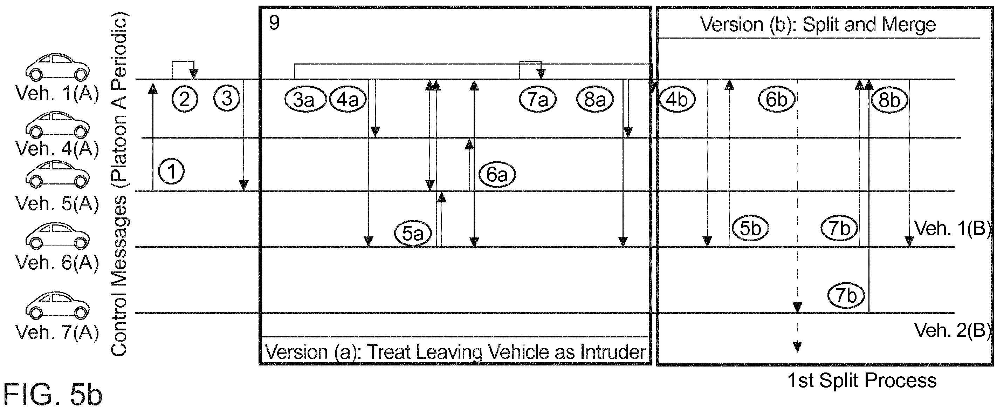

In step 1, Veh. 5(A) transmits a leave request to Veh. 1(A), e.g. using a unicast message. Veh. 5(A) may be the second vehicle and Veh. 1(A) may be the first vehicle introduced in connection with Figs. 1a to 2b. In step 2, Veh. 1(A) may process the leave request and estimate, whether an additional split action is needed. Veh. 1(A) may decide to accept or reject the request. In step 3, Veh. 1(A) transmits a leave accept or reject message to Veh. 5(A), e.g. using a unicast message. In step 3a, if no split is required, the leaving vehicle (5(A)) may be treated as an intruder and steps 4a to 8a may be taken, otherwise, steps 4b to 22b (of Figs. 5b to 5d) may be taken (apply split an re-merge). The a-case (steps 4a to 8a) may be taken if the platoon can be preserved. The a-case may correspond to dealing with a (cooperative) intruder, which may be more general. The b-case (steps 4b to 22b) may be taken if the platoon cannot be preserved. The platoon may split into platoons A and B, vehicle 5(A) may leave, and the platoons A and B may be joined (merged) again. This, the b-case may be a combination of split and merge. After either operations are finished, in step X, Veh. 1(A) may inform its followers about the return to platoon normal convoying state.

Fig. 5b shows more details of either case.

In step 4a, Veh. 1(A) informs other vehicles (4(A) and 6(A)) to prepare for Veh.'s 5 leave, e.g. using a multicast message. This message may correspond to the platoon control instruction introduced in connection with Figs. 1a to 2b. In step 5a, the vehicles (4(A) and 6(A)) send an acknowledgement message (ACK) to the leading vehicle 1(A) and to Veh. 5(A), e.g. using a multicast message. In step 6a, after Veh. 5(A) receives the acknowledgement message, it may send a StateChange message (e.g. using a multicast message) to the leading vehicle 1(A) and the preceding and following vehicles 4(A) and 6(A) and becomes an independent cooperative or non-cooperative Intruder. In step. 7a, the leader Veh. 1(A) observes the behavior of an external intruder (Veh. 5(A)). After the intruder (Veh. 5(A)) leaves the platoon, in step 8a, Veh. 1(A) requests to adopt the gap according to its own information, e.g. using a multicast message to the preceding and following vehicles 4(A) and 6(A).

In step 4b, Veh. 1(A) sends a change platoon leader message to Veh. 5(A), e.g. using a multicast message. In step 5b, Veh. 5(A) sends an acknowledgement message (ACK) to Veh. 1(A), e.g. using a unicast message. In step 6b, Veh. 1(A) informs all followers of new platoon B (e.g. Veh. 7(A)) about the new platoon leader (Veh. 6(A)), e.g. using a multicast message. In step 7b, the followers of new platoon B send an acknowledgement message to Veh. 1(A), e.g. using a unicast message. In step 8b, Veh. 1(A) sends a split done message to Veh. 6(A), the new leader of platoon B. Vehicles 6(A) and 7(A) are now denoted vehicles 1(B) and 2(B). Steps 4b to 8b may relate to a 1^{st} split process.

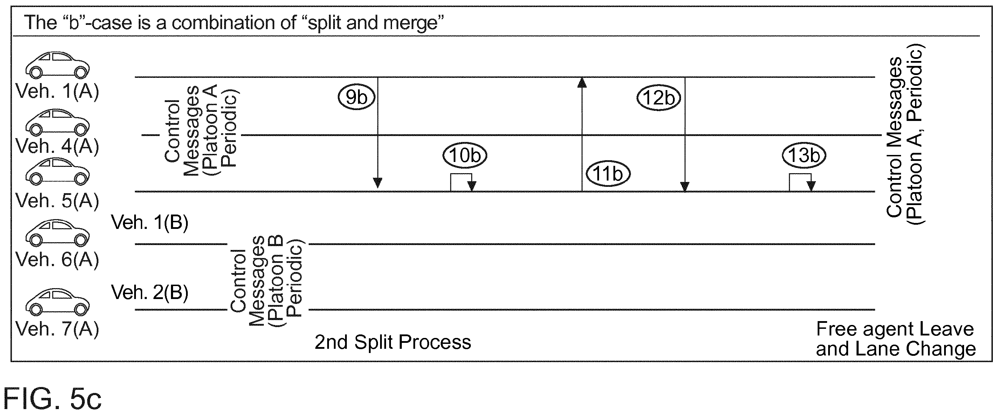

The process of the b-case continues in Fig. 5c. Between vehicles 1(A), 4(A) and 6(A) of platoon A periodic control messages are exchanged, and between vehicles 1(B) and 2(B) of platoon B periodic platoon control messages are exchanged. In step 9b, Veh. 1(A) sends change platoon leader message to Veh. 5(A), e.g. using a unicast message. In step 10b, Veh. 5(A) processes the change platoon leader messages and decides, whether to accept or reject the change platoon leader message. In step 11b, Veh. 5(A) sends an acknowledgement message (ACK) to Veh. 1(A), e.g. using a unicast message. In step 12b, Veh. 1(A) sends a split done message to Veh. 5(A), e.g. using a unicast message, to inform Veh. 5(A) that it is now platoon leader of platoon C and is to leave platoon A. Veh. 5(A) is now denoted Veh. 1(C). It is now a free agent, to leave, it changes lanes in step 13b. Control messages of platoon A are now exchanged among Veh. 1(A) and 4(A). Steps 9b to 12b may relate to a 2^{nd} split process.

In Fig. 5d, the process of the b-case continues. In step 14b, Veh. 1(A) sends an advertising message (for a merge maneuver) to Veh. 1(B) (former Veh. 6(A)), the leading vehicle of platoon B, e.g. as a broadcast message. In step 15b, Veh. 6(A) may initiate the merge platoon maneuver. In step 16b, Veh. 6(A) transmits a merge request message to Veh. 1(A), e.g. using a unicast message. This may start the third process, a merge process. In step 17b, Veh. 1(A) may initiate the merge platoon maneuver. In step 18b, Veh. 1(A) may send a merge response message to Veh. 1(B), e.g. using a unicast message. In Step 19b, Veh. 1(B) may process the merge response message and reduce the time-gap (to Veh. 4(A)) in case it accepts the merge.

In step 20b, Veh. 1(B) sends a change platoon leader message to its followers (e.g. Veh. 2(B)), e.g. using a multicast message. In step 21b, the followers of Veh. 1(B) (or former Veh. 6(A)) transmit acknowledgement messages (ACK) to Veh. 1(B), e.g. using unicast messages. In Fig. 22b, Veh. 1(B) sends a merge done message to Veh. 1(A), e.g. using a unicast message. Veh. 1(B) and 2(B) (former vehicles 6(A), 7(A)) are now denoted Veh. 5(A) and 6(A). Periodic control messages of platoon A are now exchanged among vehicles 1(A), 4(A), 5(A) and 6(A).

Instead of the split and merge maneuvers of steps 4b to 22b, the split and merge maneuvers of Figs. 3a to 3c and 4a to 4c may be used.

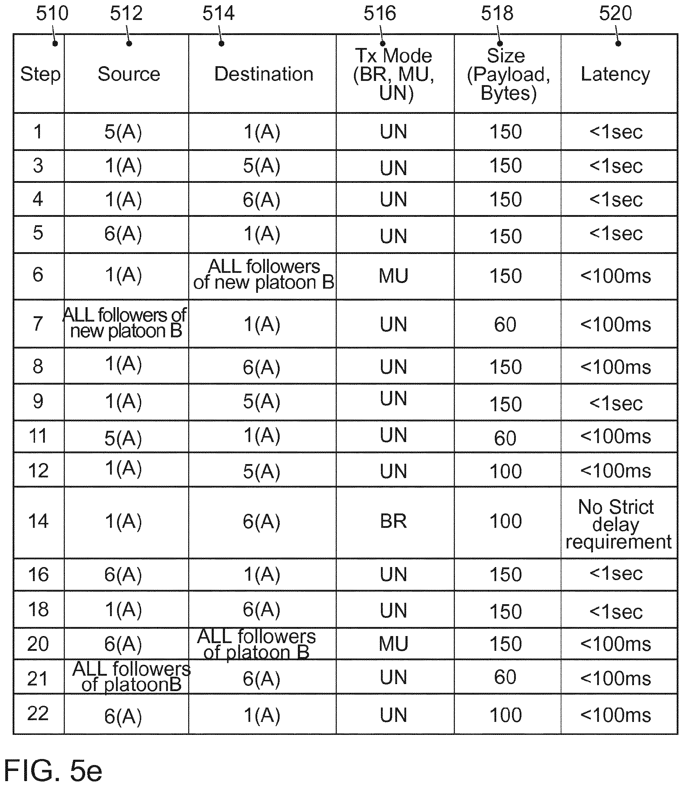

Fig. 5e shows a table of the messages related to the message steps of the b-case. Column 510 shows the step number, column 512 the source of the message, column 514 the destination of the message, column 516 the transmission mode (broadcast, multicast or unicast), column 518 the size of the payload in bytes and column 520 shows the latency. The steps 1 to 22 of column 510 correspond to the respective steps 1 to 3, 4b to 22b of the b-case.

The size of the messages related to steps 1, 3, 4, 5, 6, 8, 9, 16, 18, 20 may be 150 bytes, the size of the messages related to steps 12, 14 22, and the size of the messages related to steps 7, 11 and 21 may be 60 bytes. The latency of the messages related to steps 1,2, 3, 4, 9, 16 and 18 may be lower than 1 s, the latency of the messages related to steps 6, 7, 8, 11, 12, 20, 21 and 22 may be lower than 100 ms. The message of step 14 might have to strict delay requirement.

At least some embodiments provide a coordination/Interaction approach between the head (e.g. the leading vehicle) and the members (intra-platooning) and among platoons (inter-platoon for high density platooning (e.g. of the platoon of vehicles), where safety and .efficiency may be of high priority. The head may interact periodically with members, by proposing configuration parameters supports the steady state of the platoon as well as the maneuvers whenever they are triggered. At least some embodiments may be focused on providing a high density, which makes safety more critical. Lateral (convoying) may also be considered, while most approaches focuses on longitudinal. Compared to other approaches, embodiments may use different signaling that allows faster and in some cases more efficient/safer maneuver in the context a (/or among) platoon(s). For the Merge and Split process (e.g. the platoon merge/split maneuver), the signaling according to at least some embodiments may make sure that the maneuver is safer and in many cases faster: Between Step 7 and a point of time when there is a significant gap between the platoons, the vehicles may listen to both leaders and both leaders may align their Commands". The Merge process according to embodiments may be safer, while Merge processes of at least some other approaches may lead to the release/dissolution of the platoon. The follower leave maneuver may be handled as a combination of two split actions and one merge, which may be slow. The approach taken in at least some embodiments (of treating the leaving vehicle like a cooperative intruder) may be faster, with less signaling being exchanged.

At least some embodiments may enable high density platooning; some maneuvers may be executed faster and in a more reliable way, and may enable coordination of a platoon with other autonomous vehicles e.g., lane merging case.

More details and aspects of the method, process or maneuver are mentioned in connection with the proposed concept or one or more examples described above (e.g. Fig. 1a to 4c). The method, process or maneuver may comprise one or more additional optional features corresponding to one or more aspects of the proposed concept or one or more examples described above or below.

As already mentioned, in embodiments the respective methods may be implemented as computer programs or codes, which can be executed on a respective hardware. Hence, another embodiment is a computer program having a program code for performing at least one of the above methods, when the computer program is executed on a computer, a processor, or a programmable hardware component. A further embodiment is a computer readable storage medium storing instructions which, when executed by a computer, processor, or programmable hardware component, cause the computer to implement one of the methods described herein.

A person of skill in the art would readily recognize that steps of various above-described methods can be performed by programmed computers, for example, positions of slots may be determined or calculated. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, Digital Signal Processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the detailed description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

### List of reference signs

- 10: Apparatus
- 12: Communication interface
- 14: Control module
- 20: Apparatus
- 22: Communication interface
- 24: Control module
- 100: Leading vehicle
- 110: Transmitting a platoon control instruction
- 120: Receiving one or more acknowledgement messages
- 130: Determining a timeout
- 132: Repeating a transmission
- 200: Vehicle
- 210: Receiving a platoon control instruction
- 220: Transmitting an acknowledgement message
- 230: Receiving an indication related to a completion
- 300: Platoon of vehicles

## Claims

1. A method for a member vehicle (200) of a platoon of vehicles (300), the method comprising:
the member vehicle (200) receiving (210) a platoon control instruction, wherein the platoon control instruction relates to a change of a composition of the platoon of vehicles, wherein a first vehicle being a leading vehicle of at least a part of the platoon of vehicles and a second vehicle are involved in the change, the second vehicle being (i) a leading vehicle of a second platoon to be split from the platoon, (ii) a leading vehicle of a second platoon to be merged with the platoon, or (iii) a vehicle that intends to leave the platoon, wherein the member vehicle (200) receives the platoon control instruction from at least the first vehicle;
the member vehicle (200) determining an acknowledgement message based on the platoon control instruction,
wherein the acknowledgement message is determined with an acknowledgement, ACK, if the member vehicle (200) approves the platoon control instruction or if the member vehicle (200) is willing to, or capable of, executing the platoon control instruction,
wherein the acknowledgement message is determined with a negative acknowledgement, NACK, if the member vehicle (200) disapproves the platoon control instruction or if the member vehicle (200) is unwilling to or incapable of executing the platoon control instruction; and
the member vehicle (200) transmitting (220) the acknowledgement message in response to the platoon control instruction to the first vehicle and to the second vehicle.

2. The method according to claim 1 wherein the platoon control instruction is related to a platoon merge maneuver, wherein the platoon of vehicles (300) comprises a first platoon of vehicles and a second platoon of vehicles, wherein the first vehicle is the leading vehicle of the first platoon of vehicles and wherein the second vehicle is the leading vehicle of the second platoon of vehicles, wherein the platoon control instruction is suitable for merging the first platoon of vehicles and the second platoon of vehicles to form a combined platoon of vehicles.

3. The method according to claim 2, wherein the first vehicle is the leading vehicle of the combined platoon of vehicles, and/or wherein the method further comprises receiving (230) an indication related to a completion of the platoon merge maneuver from the first vehicle after the transmission (220) of the acknowledgement message.

4. The method according to claim 1 wherein the platoon control instruction is related to a platoon split maneuver, wherein the platoon of vehicles (300) comprises a first platoon of vehicles, wherein the first vehicle is the leading vehicle of the first platoon of vehicles, and wherein the second vehicle is a vehicle of the platoon of vehicles destined to lead a second platoon of vehicles to be split from the platoon of vehicles, wherein the platoon control instruction informs member vehicles (200) of the second platoon of vehicles about the change in leadership.

5. The method according to claim 4, wherein the method further comprises the member vehicle (200) receiving (230) an indication related to a completion of the platoon split maneuver from the second vehicle after the transmission (220) of the acknowledgement message.

6. The method according to claim 1, wherein the wherein the platoon control instruction relates to a desire of a further vehicle of the platoon to leave the platoon of vehicles, wherein the first vehicle is a leading vehicle (100) of the platoon of vehicles and wherein the second vehicle is the further vehicle.

7. The method according to one of the previous claims, wherein the platoon control instruction is received (210) from the first vehicle and from the second vehicle, and/or wherein the acknowledgement message is a multicast message of a vehicular communication protocol, wherein the multicast message is addressed at least to the first vehicle and to the second vehicle.

8. A method for a leading vehicle (100) of a platoon of vehicles (300), the method comprising:
transmitting (110) a platoon control instruction to member vehicles (200) of the platoon of vehicles (300), wherein the platoon control instruction is related to a change of a composition of the platoon of vehicles (300), wherein the leading vehicle and a second vehicle are involved in the change, the second vehicle being (i) a leading vehicle of a second platoon to be split from the platoon, (ii) a leading vehicle of a second platoon to be merged with the platoon, or (iii) a vehicle that intends to leave the platoon, wherein the platoon control instruction indicates, that acknowledgement messages transmitted in response to the platoon control instruction are to be transmitted to the leading vehicle and to the second vehicle; and
receiving (120) one or more acknowledgement messages in response to the platoon control instruction from the member vehicles (200) of the platoon of vehicles (300), wherein the one or more acknowledgement messages indicate,
if the respective acknowledgement message comprises an acknowledgement, ACK, that the respective member vehicle (200) approves the platoon control instruction or that the member vehicle (200) is willing to, or capable of, executing the platoon control instruction, or
if the respective acknowledgement message comprises a negative acknowledgement, NACK, the respective member vehicle (200) disapproves the platoon control instruction or that the member vehicle (200) is unwilling to or incapable of executing the platoon control instruction.

9. The method according to claim 8, wherein the one or more acknowledgement messages are multicast messages of a vehicular communication protocol, wherein the multicast messages are addressed to the leading vehicle (100) and to the second vehicle.

10. The method according to one of the claims 8 or 9, wherein the method further comprises determining (130) a timeout based on the transmitted platoon control instruction and based on the received (120) one or more acknowledgement messages, wherein the method comprises repeating (132) a Transmission (110) of the platoon control instruction or aborting a platooning maneuver associated with the platoon control instruction if a timeout is determined.

11. The method according to one of the claims 8 to 10, wherein the platoon control instruction relates to a change in leadership of at least a part of the platoon of vehicles, wherein the leading vehicle (100) and the second vehicle are involved in the change in leadership of at least a part of the platoon of vehicles, or wherein the platoon control instruction relates to a desire of a further vehicle of the platoon to leave the platoon of vehicles, wherein the further vehicle is the second vehicle.

12. A computer program having a program code for performing at least one of the methods according to one of the previous claims, when the computer program is executed on a computer, a processor, or a programmable hardware component.

13. An apparatus (20) for a member vehicle (200) of a platoon of vehicles (300), the apparatus (20) comprising:
a communication interface (22) for communicating wirelessly with vehicles of the platoon of vehicles (300); and
a control module (24) configured to:
receive a platoon control instruction via the communication interface (22), wherein the platoon control instruction is related to a change of a composition of the platoon of vehicles (300), wherein a first vehicle being a leading vehicle of at least a part of the platoon of vehicles and a second vehicle are involved in the change, the second vehicle being (i) a leading vehicle of a second platoon to be split from the platoon, (ii) a leading vehicle of a second platoon to be merged with the platoon, or (iii) a vehicle that intends to leave the platoon, wherein the control module (24) is configured to receive the platoon control instruction from at least the first vehicle;
determine an acknowledgement message based on the platoon control instruction, wherein the acknowledgement message is determined with an acknowledgement, ACK, if the member vehicle (200) approves the platoon control instruction or if the member vehicle (200) is willing to, or capable of, executing the platoon control instruction,
wherein the acknowledgement message is determined with a negative acknowledgement, NACK, if the member vehicle (200) disapproves of the platoon control instruction or if the member vehicle (200) is unwilling to or incapable of executing the platoon control instruction; and
transmit the acknowledgement message in response to the platoon control instruction to the first vehicle and to the second vehicle via the communication interface (22).

14. An apparatus (10) for a leading vehicle (100) of a platoon of vehicles (300), the apparatus (10) comprising:
a communication interface (12) for communicating wirelessly with vehicles of the platoon of vehicles (300); and
a control module (14) configured to:
transmit a platoon control instruction via the communication interface (12) to member vehicles (200) of the platoon of vehicles (300), wherein the platoon control instruction is related to a change of a composition of the platoon of vehicles (300), wherein the leading vehicle and a second vehicle are involved in the change, the second vehicle being (i) a leading vehicle of a second platoon to be split from the platoon, (ii) a leading vehicle of a second platoon to be merged with the platoon, or (iii) a vehicle that intends to leave the platoon, wherein the platoon control instruction indicates, that acknowledgement messages transmitted in response to the platoon control instruction are to be transmitted to the leading vehicle and to the second vehicle, and
receive one or more acknowledgement messages in response to the platoon control instruction from the member vehicles (200) of the platoon of vehicles via the communication interface (12), wherein the one or more acknowledgement messages indicate,
if the respective acknowledgement message comprises an acknowledgement, ACK, that the respective member vehicle (200) approves the platoon control instruction or that the vehicle is willing to, or capable of, executing the platoon control instruction,
or
if the respective acknowledgement message comprises a negative acknowledgement, NACK, the respective member vehicle (200) disapproves the platoon control instruction or that the member vehicle (200) is unwilling to or incapable of executing the platoon control instruction.

## Patentansprüche

1. Verfahren für ein Mitgliedsfahrzeug (200) einer Fahrzeugkolonne (300), das Verfahren umfassend:
wobei das Mitgliedsfahrzeug (200) eine Kolonnensteuerungsanweisung empfängt (210), wobei sich die Kolonnensteuerungsanweisung auf eine Änderung einer Zusammensetzung der Fahrzeugkolonne bezieht, wobei ein erstes Fahrzeug, das ein führendes Fahrzeug von mindestens einem Teil der Fahrzeugkolonne ist, und ein zweites Fahrzeug in der Änderung involviert sind, wobei das zweite Fahrzeug (i) ein führendes Fahrzeug einer zweiten Kolonne, die von der Kolonne abgespalten werden soll, (ii) ein führendes Fahrzeug einer zweiten Kolonne, die mit der Kolonne zusammengeführt werden soll, oder (iii) ein Fahrzeug ist, das beabsichtigt, die Kolonne zu verlassen, wobei das Mitgliedsfahrzeug (200) die Kolonnensteuerungsanweisung von mindestens dem ersten Fahrzeug empfängt;
das Mitgliedsfahrzeug (200) eine Bestätigungsnachricht basierend auf der Kolonnensteuerungsanweisung festlegt,
wobei die Bestätigungsnachricht mit einer Bestätigung, ACK, festgelegt wird, falls das Mitgliedsfahrzeug (200) die Kolonnensteuerungsanweisung genehmigt oder falls das Mitgliedsfahrzeug (200) bereit oder in der Lage ist, die Kolonnensteuerungsanweisung auszuführen,
wobei die Bestätigungsnachricht mit einer negativen Bestätigung, NACK, festgelegt wird, falls das Mitgliedsfahrzeug (200) die Kolonnensteuerungsanweisung ablehnt oder falls das Mitgliedsfahrzeug (200) nicht bereit oder in der Lage ist, die Kolonnensteuerungsanweisung auszuführen; und
das Mitgliedsfahrzeug (200) die Bestätigungsnachricht als Reaktion auf die Kolonnensteuerungsanweisung an das erste Fahrzeug und an das zweite Fahrzeug überträgt (220).

2. Verfahren nach Anspruch 1, wobei sich die Kolonnensteuerungsanweisung auf ein Kolonnenzusammenführungsmanöver bezieht, wobei die Fahrzeugkolonne (300) eine erste Fahrzeugkolonne und eine zweite Fahrzeugkolonne umfasst, wobei das erste Fahrzeug das führende Fahrzeug der ersten Fahrzeugkolonne ist und wobei das zweite Fahrzeug das führende Fahrzeug der zweiten Fahrzeugkolonne ist, wobei die Kolonnensteuerungsanweisung zum Zusammenführen der ersten Fahrzeugkolonne und der zweiten Fahrzeugkolonne, um eine kombinierte Fahrzeugkolonne auszubilden, geeignet ist.

3. Verfahren nach Anspruch 2,
wobei das erste Fahrzeug das führende Fahrzeug der kombinierten Fahrzeugkolonne ist,
und/oder wobei das Verfahren ferner das Empfangen (230) einer Angabe, die sich auf eine Beendigung des Kolonnenzusammenführungsmanövers bezieht, von dem ersten Fahrzeug nach der Übertragung (220) der Bestätigungsnachricht umfasst.

4. Verfahren nach Anspruch 1, wobei sich die Kolonnensteuerungsanweisung auf ein Kolonnenaufteilungsmanöver bezieht, wobei die Fahrzeugkolonne (300) eine erste Fahrzeugkolonne umfasst, wobei das erste Fahrzeug das führende Fahrzeug der ersten Fahrzeugkolonne ist, und wobei das zweite Fahrzeug ein Fahrzeug der Fahrzeugkolonne ist, das dafür bestimmt ist, eine zweite Fahrzeugkolonne zu führen, die von der Fahrzeugkolonne abgespalten werden soll, wobei die Kolonnensteuerungsanweisung Mitgliedsfahrzeuge (200) der zweiten Fahrzeugkolonne über die Änderung der Führung informiert.

5. Verfahren nach Anspruch 4, wobei das Verfahren ferner umfasst, dass das Mitgliedsfahrzeug (200) eine Angabe, die sich auf die Beendigung des Kolonnenaufteilungsmanöver bezieht, von dem zweiten Fahrzeug nach der Übertragung (220) der Bestätigungsnachricht empfängt (230).

6. Verfahren nach Anspruch 1, wobei sich die Kolonnensteuerungsanweisung auf den Wunsch eines weiteren Fahrzeugs des Kolonne bezieht, die Fahrzeugkolonne zu verlassen, wobei das erste Fahrzeug ein führende Fahrzeug (100) der Fahrzeugkolonne ist und wobei das zweite Fahrzeug das weitere Fahrzeug ist.

7. Verfahren nach einem der vorstehenden Ansprüche, wobei die Kolonnensteuerungsanweisung von dem ersten Fahrzeug und von dem zweiten Fahrzeug empfangen (210) wird,
und/oder wobei die Bestätigungsnachricht eine Multicast-Nachricht eines Fahrzeugkommunikationsprotokolls ist, wobei die Multicast-Nachricht mindestens an das erste Fahrzeug und an das zweite Fahrzeug adressiert ist.

8. Verfahren für ein führendes Fahrzeug (100) einer Fahrzeugkolonne (300), das Verfahren umfassend:
Übertragen (110) einer Kolonnensteuerungsanweisung an Mitgliedsfahrzeuge (200) der Fahrzeugkolonne (300), wobei sich die Kolonnensteuerungsanweisung auf eine Änderung einer Zusammensetzung der Fahrzeugkolonne (300) bezieht, wobei das führende Fahrzeug und ein zweites Fahrzeug in der Änderung involviert sind, wobei das zweite Fahrzeug (i) ein führendes Fahrzeug einer zweiten Kolonne, die von der Kolonne abgespalten werden soll, (ii) ein führendes Fahrzeug einer zweiten Kolonne, die mit der Kolonne zusammengeführt werden soll, oder (iii) ein Fahrzeug ist, das beabsichtigt, die Kolonne zu verlassen, wobei die Kolonnensteuerungsanweisung angibt, dass Bestätigungsnachrichten, die als Reaktion auf die Kolonnensteuerungsanweisung übertragen werden, an das führende Fahrzeug und an das zweite Fahrzeug zu übertragen sind; und
Empfangen (120) einer oder mehrerer Bestätigungsnachrichten als Reaktion auf die Kolonnensteuerungsanweisung von den Mitgliedsfahrzeugen (200) der Fahrzeugkolonne (300), wobei die eine oder die mehreren Bestätigungsnachrichten angeben,
falls die jeweilige Bestätigungsnachricht eine Bestätigung, ACK, umfasst, dass das jeweilige Mitgliedsfahrzeug (200) die Kolonnensteuerungsanweisung genehmigt oder dass das Mitgliedsfahrzeug (200) bereit oder in der Lage ist, die Kolonnensteuerungsanweisung auszuführen, oder
falls die jeweilige Bestätigungsnachricht eine negative Bestätigung, NACK, umfasst, das jeweilige Mitgliedsfahrzeug (200) die Kolonnensteuerungsanweisung ablehnt oder das Mitgliedsfahrzeug (200) nicht bereit oder nicht in der Lage ist, die Kolonnensteuerungsanweisung auszuführen.

9. Verfahren nach Anspruch 8,
wobei die eine oder mehrere Bestätigungsnachrichten Multicast-Nachrichten eines Fahrzeugkommunikationsprotokolls sind, wobei die Multicast-Nachrichten an das führende Fahrzeug (100) und an das zweite Fahrzeug adressiert sind.

10. Verfahren nach einem der Ansprüche 8 oder 9,
wobei das Verfahren ferner das Festlegen (130) einer Zeitüberschreitung basierend auf der übertragenen Kolonnensteuerungsanweisung und basierend auf der empfangenen (120) einen oder mehreren Bestätigungsnachrichten umfasst, wobei das Verfahren ein Wiederholen (132) einer Übertragung (110) der Kolonnensteuerungsanweisung oder das Abbrechen eines Kolonnenmanövers, das mit der Kolonnensteuerungsanweisung verknüpft ist, falls eine Zeitüberschreitung bestimmt wird, umfasst.

11. Verfahren nach einem der Ansprüche 8 bis 10,
wobei sich die Kolonnensteuerungsanweisung auf eine Änderung in der Führung von mindestens einem Teil der Fahrzeugkolonne bezieht, wobei das führende Fahrzeug (100) und das zweite Fahrzeug in der Änderung der Führung von mindestens einem Teil der Fahrzeugkolonne involviert sind,
oder wobei sich die Kolonnensteuerungsanweisung auf den Wunsch eines weiteren Fahrzeugs der Kolonne bezieht, die Fahrzeugkolonne zu verlassen, wobei das weitere Fahrzeug das zweite Fahrzeug ist.

12. Computerprogramm, das einen Programmcode aufweist, zum Durchführen mindestens eines der Verfahren nach einem der vorstehenden Ansprüche, wenn das Computerprogramm auf einem Computer, einem Prozessor oder einer programmierbaren Hardwarekomponente ausgeführt wird.

13. Vorrichtung (20) für ein Mitgliedsfahrzeug (200) einer Fahrzeugkolonne (300), die Vorrichtung (20) umfassend:
eine Kommunikationsschnittstelle (22) für ein drahtloses Kommunizieren mit Fahrzeugen der Fahrzeugkolonne (300); und
ein Steuermodul (24), das konfiguriert ist zum:
Empfangen einer Kolonnensteuerungsanweisung über die Kommunikationsschnittstelle (22), wobei sich die Kolonnensteuerungsanweisung auf eine Änderung einer Zusammensetzung der Fahrzeugkolonne (300) bezieht, wobei ein erstes Fahrzeug, das ein führendes Fahrzeug von mindestens einem Teil der Fahrzeugkolonne ist, und ein zweites Fahrzeug in der Änderung involviert sind, wobei das zweite Fahrzeug (i) ein führendes Fahrzeug einer zweiten Kolonne, die von der Kolonne abgespalten werden soll, (ii) ein führendes Fahrzeug einer zweiten Kolonne, die mit der Kolonne zusammengeführt werden soll, oder (iii) ein Fahrzeug ist, das beabsichtigt, die Kolonne zu verlassen, wobei das Steuermodul (24) konfiguriert ist, um die Kolonnensteuerungsanweisung von mindestens dem ersten Fahrzeug zu empfangen;
Festlegen einer Bestätigungsnachricht basierend auf der Kolonnensteuerungsanweisung, wobei die Bestätigungsnachricht mit einer Bestätigung, ACK, festgelegt wird, falls das Mitgliedsfahrzeug (200) die Kolonnensteuerungsanweisung genehmigt oder falls das Mitgliedsfahrzeug (200) bereit oder in der Lage ist, die Kolonnensteuerungsanweisung auszuführen,
wobei die Bestätigungsnachricht mit einer negativen Bestätigung, NACK, festgelegt wird, falls das Mitgliedsfahrzeug (200) die Kolonnensteuerungsanweisung ablehnt oder falls das Mitgliedsfahrzeug (200) nicht bereit oder in der Lage ist, die Kolonnensteuerungsanweisung auszuführen; und
Übertragen der Bestätigungsnachricht als Reaktion auf die Kolonnensteuerungsanweisung an das erste Fahrzeug und an das zweite Fahrzeug über die Kommunikationsschnittstelle (22).

14. Vorrichtung (10) für ein führendes Fahrzeug (100) einer Fahrzeugkolonne (300), die Vorrichtung (10) umfassend:
eine Kommunikationsschnittstelle (12) für das drahtlose Kommunizieren mit Fahrzeugen der Fahrzeugkolonne (300); und
ein Steuermodul (14), das konfiguriert ist zum:
Übertragen einer Kolonnensteuerungsanweisung über die Kommunikationsschnittstelle (12) an Mitgliedsfahrzeuge (200) der Fahrzeugkolonne (300), wobei sich die Kolonnensteuerungsanweisung auf eine Änderung einer Zusammensetzung der Fahrzeugkolonne (300) bezieht, wobei das führende Fahrzeug und ein zweites Fahrzeug in der Änderung involviert sind, wobei das zweite Fahrzeug (i) ein führendes Fahrzeug einer zweiten Kolonne, die von der Kolonne abgespalten werden soll, (ii) ein führendes Fahrzeug einer zweiten Kolonne, die mit der Kolonne zusammengeführt werden soll, oder (iii) ein Fahrzeug ist, das beabsichtigt, die Kolonne zu verlassen, wobei die Kolonnensteuerungsanweisung angibt, dass Bestätigungsnachrichten, die als Reaktion auf die Kolonnensteuerungsanweisung übertragen werden, an das führende Fahrzeug und an das zweite Fahrzeug zu übertragen sind, und
Empfangen einer oder mehrerer Bestätigungsnachrichten als Reaktion auf die Kolonnensteuerungsanweisung von den Mitgliedsfahrzeugen (200) der Fahrzeugkolonne über die Kommunikationsschnittstelle (12), wobei die eine oder die mehreren Bestätigungsnachrichten angeben,
falls die jeweilige Bestätigungsnachricht eine Bestätigung, ACK, umfasst, dass das jeweilige Mitgliedsfahrzeug (200) die Kolonnensteuerungsanweisung genehmigt oder dass das Fahrzeug bereit oder in der Lage ist, die Kolonnensteuerungsanweisung auszuführen,
oder
falls die jeweilige Bestätigungsnachricht eine negative Bestätigung, NACK, umfasst, das jeweilige Mitgliedsfahrzeug (200) die Kolonnensteuerungsanweisung ablehnt oder das Mitgliedsfahrzeug (200) nicht bereit oder nicht in der Lage ist, die Kolonnensteuerungsanweisung auszuführen.

## Revendications

1. Procédé pour un véhicule membre (200) d'un convoi de véhicules (300), le procédé comprenant :
le véhicule membre (200) recevant (210) une instruction de commande de convoi, dans lequel l'instruction de commande de convoi concerne un changement d'une composition du convoi de véhicules, dans lequel un premier véhicule étant un véhicule de tête d'au moins une partie du convoi de véhicules et un second véhicule sont impliqués dans le changement, le second véhicule étant (i) un véhicule de tête d'un second convoi à séparer du convoi, (ii) un véhicule de tête d'un second convoi à fusionner avec le convoi, ou (iii) un véhicule qui a l'intention de quitter le convoi, dans lequel le véhicule membre (200) reçoit l'instruction de commande de convoi de la part d'au moins le premier véhicule ;
le véhicule membre (200) déterminant un message d'accusé de réception sur la base de l'instruction de commande de convoi,
dans lequel le message d'accusé de réception est déterminé par un accusé de réception, ACK, si le véhicule membre (200) approuve l'instruction de commande de convoi ou si le véhicule membre (200) est disposé, ou apte, à exécuter l'instruction de commande de convoi,
dans lequel le message d'accusé de réception est déterminé par un accusé de réception négatif, NACK, si le véhicule membre (200) désapprouve l'instruction de commande de convoi ou si le véhicule membre (200) n'est pas disposé, ou est inapte, à exécuter l'instruction de commande de convoi ; et
le véhicule membre (200) transmettant (220) le message d'accusé de réception en réponse à l'instruction de commande de convoi au premier véhicule et au second véhicule.

2. Procédé selon la revendication 1, dans lequel l'instruction de commande de convoi concerne une manœuvre de fusion de convoi, dans lequel le convoi de véhicules (300) comprend un premier convoi de véhicules et un second convoi de véhicules, dans lequel le premier véhicule est le véhicule de tête du premier convoi de véhicules et dans lequel le second véhicule est le véhicule de tête du second convoi de véhicules, dans lequel l'instruction de commande de convoi est appropriée pour fusionner le premier convoi de véhicules et le second convoi de véhicules afin de former un convoi combiné de véhicules.

3. Procédé selon la revendication 2,
dans lequel le premier véhicule est le véhicule de tête du convoi combiné de véhicules,
et/ou dans lequel le procédé comprend en outre la réception (230) d'une indication concernant un achèvement de la manœuvre de fusion de convoi de la part du premier véhicule après la transmission (220) du message d'accusé de réception.

4. Procédé selon la revendication 1, dans lequel l'instruction de commande de convoi concerne une manœuvre de séparation de convoi, dans lequel le convoi de véhicules (300) comprend un premier convoi de véhicules, dans lequel le premier véhicule est le véhicule de tête du premier convoi de véhicules, et dans lequel le second véhicule est un véhicule du convoi de véhicules destiné à être en tête d'un second convoi de véhicules à séparer du convoi de véhicules, dans lequel l'instruction de commande de convoi informe les véhicules membres (200) du second convoi de véhicules du changement de véhicule de tête.

5. Procédé selon la revendication 4, dans lequel le procédé comprend en outre la réception (230) par le véhicule membre (200) d'une indication concernant un achèvement de la manœuvre de séparation de convoi de la part du second véhicule après la transmission (220) du message d'accusé de réception.

6. Procédé selon la revendication 1, dans lequel l'instruction de commande de convoi concerne une volonté d'un véhicule supplémentaire du convoi de quitter le convoi de véhicules, dans lequel le premier véhicule est un véhicule de tête (100) du convoi de véhicules et dans lequel le second véhicule est le véhicule supplémentaire.

7. Procédé selon l'une des revendications précédentes, dans lequel l'instruction de commande de convoi est reçue (210) de la part du premier véhicule et du second véhicule,
et/ou dans lequel le message d'accusé de réception est un message multidiffusion d'un protocole de communication véhiculaire, dans lequel le message multidiffusion est adressé au moins au premier véhicule et au second véhicule.

8. Procédé pour un véhicule de tête (100) d'un convoi de véhicules (300), le procédé comprenant :
la transmission (110) d'une instruction de commande de convoi aux véhicules membres (200) du convoi de véhicules (300), dans lequel l'instruction de commande de convoi concerne un changement d'une composition du convoi de véhicules (300), dans lequel le véhicule de tête et un second véhicule sont impliqués dans le changement, le second véhicule étant (i) un véhicule de tête d'un second convoi à séparer du convoi, ou (ii) un véhicule de tête d'un second convoi à fusionner avec le convoi, ou (iii) un véhicule qui a l'intention de quitter le convoi, dans lequel l'instruction de commande de convoi indique que les messages d'accusé de réception transmis en réponse à l'instruction de commande de convoi doivent être transmis au véhicule de tête et au second véhicule ; et
la réception (120) d'un ou plusieurs messages d'accusé de réception en réponse à l'instruction de commande de convoi de la part des véhicules membres (200) du convoi de véhicules (300), dans lequel le ou les messages d'accusé de réception indiquent,
si le message d'accusé de réception respectif comprend un accusé de réception, ACK, indiquant que le véhicule membre (200) respectif approuve l'instruction de commande de convoi ou que le véhicule membre (200) est disposé, ou apte, à exécuter l'instruction de commande de convoi, ou
si le message d'accusé de réception respectif comprend un accusé de réception négatif, NACK, indiquant que le véhicule membre (200) respectif désapprouve l'instruction de commande de convoi ou que le véhicule membre (200) n'est pas disposé, ou est inapte, à exécuter l'instruction de commande de convoi.

9. Procédé selon la revendication 8,
dans lequel le ou les messages d'accusé de réception sont des messages multidiffusion d'un protocole de communication véhiculaire, dans lequel les messages multidiffusion sont adressés au véhicule de tête (100) et au second véhicule.

10. Procédé selon l'une des revendications 8 ou 9,
dans lequel le procédé comprend en outre la détermination (130) d'une temporisation sur la base de l'instruction de commande de convoi transmise et sur la base du ou des messages d'accusé de réception reçus (120), dans lequel le procédé comprend la répétition (132) d'une transmission (110) de l'instruction de commande de convoi ou l'abandon d'une manœuvre de convoi associée à l'instruction de commande de convoi si une temporisation est déterminée.

11. Système selon l'une des revendications 8 à 10,
dans lequel l'instruction de commande de convoi concerne un changement de tête d'au moins une partie du convoi de véhicules, dans lequel le véhicule de tête (100) et le second véhicule sont impliqués dans le changement de tête d'au moins une partie du convoi de véhicules,
ou dans lequel l'instruction de commande de convoi concerne une volonté d'un véhicule supplémentaire du convoi de quitter le convoi de véhicules, dans lequel le véhicule supplémentaire est le second véhicule.

12. Programme informatique ayant un code de programme pour mettre en œuvre au moins un des procédés selon l'une des revendications précédentes, lorsque le programme informatique est exécuté sur un ordinateur, un processeur, ou un composant matériel programmable.

13. Appareil (20) pour un véhicule membre (200) d'un convoi de véhicules (300), l'appareil (20) comprenant :
une interface de communication (22) pour communiquer sans fil avec des véhicules du convoi de véhicules (300) ; et
un module de commande (24) configuré pour :
recevoir une instruction de commande de convoi par l'intermédiaire de l'interface de communication (22), dans lequel l'instruction de commande de convoi concerne un changement d'une composition du convoi de véhicules (300), dans lequel un premier véhicule étant un véhicule de tête d'au moins une partie du convoi de véhicules et un second véhicule sont impliqués dans le changement, le second véhicule étant (i) un véhicule de tête d'un second convoi à séparer du convoi, ou (iii) un véhicule de tête d'un second convoi à fusionner avec le convoi, ou (iii) un véhicule qui a l'intention de quitter le convoi, dans lequel le module de commande (24) est configuré pour recevoir l'instruction de commande de convoi de la part d'au moins le premier véhicule ;
déterminer un message d'accusé de réception basé sur l'instruction de commande de convoi, dans lequel le message d'accusé de réception est déterminé par un accusé de réception, ACK, si le véhicule membre (200) approuve l'instruction de commande de convoi ou si le véhicule membre (200) est disposé, ou apte, à exécuter l'instruction de commande de convoi,
dans lequel le message d'accusé de réception est déterminé par un accusé de réception négatif, NACK, si le véhicule membre (200) désapprouve l'instruction de commande de convoi ou si le véhicule membre (200) n'est pas disposé, ou est inapte, à exécuter l'instruction de commande de convoi ; et
transmettre le message d'accusé de réception en réponse à l'instruction de commande de convoi au premier véhicule et au second véhicule par l'intermédiaire de l'interface de communication (22).

14. Appareil (10) pour un véhicule de tête (100) d'un convoi de véhicules (300), l'appareil (10) comprenant :
une interface de communication (12) pour communiquer sans fil avec des véhicules du convoi de véhicules (300) ; et
un module de commande (14) configuré pour :
transmettre une instruction de commande de convoi par l'intermédiaire de l'interface de communication (12) aux véhicules membres (200) du convoi de véhicules (300), dans lequel l'instruction de commande de convoi concerne un changement d'une composition du convoi de véhicules (300), dans lequel le véhicule de tête et un second véhicule sont impliqués dans le changement, le second véhicule étant (i) un véhicule de tête d'un second convoi devant être séparé du convoi, (ii) un véhicule de tête d'un second convoi devant être fusionné avec le convoi, ou (iii) un véhicule ayant l'intention de quitter le convoi, dans lequel l'instruction de commande de convoi indique que les messages d'accusé de réception transmis en réponse à l'instruction de commande de convoi doivent être transmis au véhicule de tête et au second véhicule, et
recevoir un ou plusieurs messages d'accusé de réception en réponse à l'instruction de commande de convoi de la part des véhicules membres (200) du convoi de véhicules par l'intermédiaire de l'interface de communication (12), dans lequel le ou les messages d'accusé de réception indiquent,
si le message d'accusé de réception respectif comprend un accusé de réception, ACK, indiquant que le véhicule membre respectif (200) approuve l'instruction de commande de convoi ou que le véhicule est disposé, ou apte, à exécuter l'instruction de commande de convoi,
ou
si le message d'accusé de réception respectif comprend un accusé de réception négatif, NACK, indiquant que le véhicule membre (200) respectif désapprouve l'instruction de commande de convoi ou que le véhicule membre (200) n'est pas disposé, ou est inapte, à exécuter l'instruction de commande de convoi.
